# EUROPÄISCHE PATENTSCHRIFT

(11) **EP 3 033 194 B1**
(45) Veröffentlichungstag und Bekanntmachung des Hinweises auf die Patenterteilung: **28.06.2017**
(21) Anmeldenummer: 14750374.2
(22) Anmeldetag: 12.08.2014
(51) Int. Cl.: B23B 51/10, B23B 49/00

(54) **AUSWECHSELBARER ANSCHLAG FÜR EIN BOHR-, FRÄS- ODER SENKWERKZEUG**
EXCHANGEABLE STOP FOR A DRILLING, MILLING OR COUNTERSINKING TOOL
BUTÉE REMPLAÇABLE POUR OUTIL DE PERÇAGE, DE FRAISAGE OU DE CHANFREINAGE

(30) Priorität: 16.08.2013 DE 102013013499
(43) Veröffentlichungstag der Anmeldung: 22.06.2016
(73) Patentinhaber: Gühring KG, 72458 Albstadt (DE)
(72) Erfinder: REBHOLZ, Felix, 72510 Stetten-Frohnstetten (DE)
(74) Vertreter: Spachmann, Holger
(86) Internationale Anmeldenummer: PCT/EP2014/067277
(87) Internationale Veröffentlichungsnummer: WO 2015/022337

(56) Entgegenhaltungen:
- DE-A1-102008 022 968
- GB-A- 488 242
- GB-A- 2 269 333
- US-B1- 7 607 871

## Beschreibung

Die Erfindung betrifft einen auswechselbaren Anschlag für ein rotierendes Bohr-, Fräs- oder Senkwerkzeug gemäß dem Oberbegriff des Patentanspruchs 1 und ein Werkzeug, an dessen Werkzeugschaft ein auswechselbarer Anschlag befestigt ist.

### STAND DER TECHNIK

Aus dem Stand der Technik sind Anschläge für ein Bohr-, Fräs- oder Senkwerkzeug bekannt, die als sogenannte "Microstop"-Adapter bezeichnet werden. Diese Adapter umfassen in der Regel einen Bohrschaft zur Aufnahme in ein Spannfutter einer Drehmaschine oder eines handgehaltenen Drehwerkzeugs und ein Lager, mit denen eine Anschlaghülse sich frei um einen in den Adapter eingesetzten Bohr-, Fräs- oder Senkkopf drehen kann, so dass bei Erreichen einer vorgegebenen Eindringtiefe in ein Bauteil die Anschlaghülse auf der Oberfläche des Bauteils aufsetzen kann, und sich der Bohr-, Fräs-, oder Senkkopf frei drehen kann. Derartige Anschläge werden insbesondere für Senk- oder Fräsarbeiten im Fahrzeug- und Flugzeugbau eingesetzt.

Der Bohrschaft derartiger Microstop-Adapter wird im Gebrauch in ein Spannfutter eines Bohrwerkzeugs, beispielsweise einer Bohrmaschine, oder eines Fräswerkzeugs aufgenommen. Die Anschlaghülse kann mit einem axialen Verstellgewinde versehen sein, womit die Längsposition der Anschlaghülse relativ zum Werkzeugkopf verstellt und somit die Anschlagtiefe eingestellt werden kann. Der Adapter weist eine Aufnahme, beispielsweise ein Schraubgewinde, einen Bajonettverschluss oder eine Schnellspanneinrichtung zur Aufnahme des Bohr-, Fräs- oder Senkkopfs auf, um diesen zentrisch in der Anschlaghülse zu lagern. Somit umfassen bekannte Microstop-Adapter einen Bohrschaft und die frei drehbar gelagerte Anschlaghülse, und der Werkzeugkopf kann nach Bedarf ausgewechselt werden. Somit wird ein Anschlagadapter mit Bohrschaft bereitgestellt, in dem ein Spanbearbeitungswerkzeugkopf zur rotierenden Spanbearbeitung eingesetzt werden kann.

Aus der DE 101 54 434 B4 geht eine Anschlagvorrichtung mit Werkzeugschaft hervor, die eine frei drehbare Anschlaghülse umfasst, die um einen Werkzeugschaft der Anschlagvorrichtung mittels eines einzigen Drehlagers verdrehbar ist. Ein Bohr- oder Fräswerkzeug kann in den Werkzeugschaft der Anschlagvorrichtung eingesetzt und drehfest arretiert werden.

Bei den bekannten Microstop-Adaptern ergibt sich das Problem, dass durch das auswechselbare Einsetzen des Werkzeugkopfs in die Adapteraufnahme ein schlechter Rundlauf des Werkzeugkopfs und damit eine minderwertige Bohrung, Senkung oder Fräsbearbeitung auftreten kann. Des Weiteren kann bei einer Fehlaufnahme bzw. einem Aufnahmespiel zwischen Adapter und Werkzeugkopf nicht nur der Rundlauf, sondern auch die Winkellage des Werkzeugkopfs in der Bohrungsvertiefung eingestellt werden, so dass eine Bearbeitungsqualität herabgesetzt wird. Abhängig davon, in welche Richtung ein Werker Druck auf das Werkzeug ausübt, können unterschiedliche Arbeitsergebnisse entstehen.

Ausgehend von dem oben dargestellten Problem ergibt sich die Aufgabe, einen auswechselbaren Anschlag für ein Bohr-, Senk- oder Fräswerkzeug auszubilden, der einen optimalen Rundlauf, eine definierte Aufsetzwinkellage für die spanende Bearbeitung und eine präzise Anschlageinstellung ermöglicht, und somit die vorgenannten Nachteile des Stands der Technik überwindet.

Diese Aufgabe wird durch einen auswechselbaren Anschlag sowie ein Bohrwerkzeug, das mit einem derartigen Anschlag ausgerüstet ist, gelöst. Vorteilhafte Weiterentwicklungen der Erfindung sind Gegenstand der Unteransprüche.

### OFFENBARUNG DER ERFINDUNG

Erfindungsgemäß wird ein auswechselbarer Anschlag für ein rotierendes Bohr-, Fräs- oder Senkwerkzeug vorgeschlagen, wobei eine Anschlaghülse durch ein Gleit- oder Wälzlager frei drehend an dem Bohrwerkzeug angeordnet ist. Es wird vorgeschlagen, dass eine erste Lagerbuchse des Wälz- oder Gleitlagers die Anschlaghülse trägt und eine zweite Lagerbuchse des Lagers drehfest auf einem Verstellring sitzt. Der Verstellring trägt ein Innengewinde und ist entweder mittels eines auf einem Außenumfang einer Verstellhülse oder auf einem Schaft des Werkzeugs angebrachten Verstellgewindes, axial gegenüber der Verstellhülse verdrehbar. Die Verstellhülse ist auswechselbar an dem Schaft des Werkzeugs drehfest befestigbar. Alternativ ist der Verstellring auswechselbar auf das Verstellgewinde des Werkzeugs aufschraubbar oder längsverschieblich gelagert. Mit anderen Worten wird ein auswechselbarer Anschlag vorgeschlagen, der unmittelbar an ein einstückiges Bohr-, Fräs- oder Senkwerkzeug aufgeschoben und auf dem Werkzeugschaft befestigt werden kann. Die Verstellhülse koppelt den Anschlag mit dem Werkzeugschaft eines in die Verstellhülse einsetzbaren Rotationswerkzeugs. Die Verstellhülse trägt ein Verstellgewinde, auf der ein Verstellring verschraubt ist. Durch ein Verdrehen des Verstellrings gegenüber der drehfest auf dem Bohrschaft sitzenden Verstellhülse kann eine Anschlaghülse, die frei drehend am Verstellring gelagert ist, axial derart verstellt werden, dass die Eindringtiefe des Werkzeugs in ein zu bearbeitendes Bauteil frei einstellbar ist. Die Ganghöhe des Verstellgewindes definiert eine Einstellgenauigkeit der Einschlagtiefe. Bevorzugt ist das Verstellgewinde als Feingewinde ausgeführt. Wird eine voreingestellte Eindringtiefe erreicht, sitzt ein stirnseitiger Anschlagring der Anschlaghülse auf der Werkzeugoberfläche auf, während sich das Werkzeug im Inneren frei mit der Verstellhülse und dem Verstellring dreht, und die Außenhülse aufgrund der Gleit- oder Wälzlagerkopplung mit dem Verstellring auf der Bauteiloberfläche ruhen kann.

Somit wird statt eines "Microstop"-Adapters mit Adapterschaft ein an einem Bohr-, Fräs- oder Senkwerkzeug mit einstückigem Werkzeugschaft auswechselbar ankoppelbarer "Microstop"-Anschlag vorgeschlagen, der auf den Werkzeugschaft eines beliebigen Bohr-, Fräs- oder Senkwerkzeugs aufgeschoben werden kann, und der mit einem frei einstellbaren Anschlag, zur Festlegung einer Eindringtiefe des Werkzeugs an ein Bauteil, eingestellt werden kann. Das Werkzeug kann unmittelbar in ein Spannfutter einer Drehmaschine oder einer Bohrmaschine eingespannt werden, so dass ein optimaler Rundlauf gewährleistet ist. Der Ansetzwinkel des Werkzeugs kann optimal gewählt werden, wobei die Anschlaghülse keine mittelbare Verbindung zwischen Werkzeugkopf und antreibendem Bohrwerkzeug bildet, sondern lediglich auf dem Bohrschaft des Werkzeugs aufsetzt. Der Tiefenanschlag wird durch die Position der Verstellhülse auf dem Bohrschaft sowie der Relativposition des Verstellrings gegenüber der Verstellhülse definiert.

In einer vorteilhaften Weiterbildung kann am Verstellgewinde eine Arretiermutter, insbesondere eine Rändelmutter, angeordnet sein, die zur Konterarretierung des Verstellrings gegenüber der Verstellhülse ausgelegt ist. Mittels der Arretiermutter kann der Verstellring auf der Verstellhülse gekontert werden, so dass eine einmal eingestellte Anschlagtiefe beibehalten bleibt und ein unabsichtliches Verdrehen von Verstellring gegen Verstellhülse verhindert wird. Hierdurch wird die Beibehaltung der Tiefenanschlagseinstellung gewährleistet und es können eine Vielzahl von Senk- oder Fräsbearbeitungen mit gleichem Tiefenanschlag selbst bei einer rauen Handhabung des Werkzeugs vorgenommen werden.

Sofern eine Arretiermutter vorhanden ist, ist weiterhin denkbar, dass die Arretiermutter eine Feststellschraube umfasst, mit der die Axialposition der Arretiermutter auf der Verstellhülse fixierbar ist. Die Arretiermutter kann beispielsweise radial in der Arretiermutter ausgerichtet in einen Gewindegang der Verstellhülse eingreifen, und die Drehposition der Arretiermutter auf der Verstellhülse fixieren. Die Arretiermutter ermöglicht ein Verkontern des Verstellrings, so dass dieser sich nicht unbeabsichtigt gegenüber der Verstellhülse verdrehen kann. Durch eine Feststellschraube kann die axiale Lage der Arretiermutter definiert werden, so dass beispielsweise werkseitig ein vorgegebener Anschlagbereich oder Anschlagsposition des Tiefenanschlags vorgegeben werden kann. Selbst bei Wechseln des Werkzeugs bleibt die Anschlagtiefe in einem vorgegebenen Längenbereich vorgegeben.

In vorteilhafter Weise kann die Arretiermutter einen Werkzeug-Gewindeschaft oder einen Werkzeug-Schnellwechselschaft umfassen. Somit kann die Arretiermutter gleichzeitig den Richtung Spannfutter bildenden Abschluss des Werkzeugs bilden, und eine Schaftaufnahme beispielsweise als Werkzeuggewinde zum Einschrauben in ein Spannfutter oder einen Schnellwechselschaft, beispielsweise einen Clickchange-Schaft umfassen. Das Senkwerkzeug ist im Anschlag aufgenommen und fixiert und der Anschlag verbindet das Senkwerkzeug mit dem Spannfutter. Hierdurch kann ein Werkzeug durch Aufnahme in den Anschlag in verschiedenartigen Spannfuttern eingespannt werden.

In einer vorteilhaften Weiterbildung kann das Verstellgewinde eine oder mehrere Längsnuten aufweisen und die Arretiermutter und/oder der Verstellring zumindest eine, insbesondere zwei oder mehrere in die Längsnuten eingreifende Rastelemente, insbesondere federnd gelagerte Rastkugeln oder Raststifte, umfassen, die eine axiale Minimalverstellbarkeit der Anschlaghülse gegenüber der Verstellhülse definieren. Die Längsnuten in der Verstellhülse dienen dazu, Rastelemente, die im Verstellring angeordnet sind, beim Verdrehen aus dem Eingriff in eine Längsnut in die nächste Längsnut zu rasten und somit einen minimalen Drehwinkel, der einen minimalen axialen Verstellweg der Anschlaghülse gegenüber dem Werkzeugkopf definiert, für einen Werker hörbar und fühlbar zu definieren. Somit kann der Werker durch das bloße Rastgeräusch eine Anschlagverstellung um einen Mindestweg durchführen. Dies vereinfacht eine schnelle und präzise Verstellung des Anschlags, wobei beispielsweise auf eine Skalen markierung an der Anschlaghülse verzichtet werden kann und selbst bei schwer zugänglichen Arbeitsbereichen ein Anschlag präzise verstellt werden kann.

In einer vorteilhaften Weiterbildung kann der Verstellring einen radial gegenüber der Anschlaghülse vergrößerten Griffbereich, bevorzugt einen gerändelten Griffbereich, umfassen. Um den Verstellring gegenüber der Verstellhülse zu verdrehen, kann bevorzugt ein gegenüber der Anschlaghülse vergrößerter Griffbereich in Form eines Griffrings am Verstellring angeordnet sein, der von einem Werker leicht gegenüber der Verstellhülse verdreht werden kann. Die Verstellhülse ist gegenüber dem Verstellring frei drehbar gelagert. Dementsprechend muss ein Werker einen Bereich des Verstellrings fassen können, um diesen gegenüber der Verstellhülse zu verdrehen. Ein radial gegenüber der Verstellhülse vergrößerten Griffbereich des Verstellrings erleichtert eine Verstellung der axialen Position der Anschlaghülse und somit eine leichtere Veränderung der Anschlagtiefe, wobei der Verstellring dennoch nur einen kurzen axialen Überstand gegenüber der Anschlaghülse aufweist. Somit kann die Gesamtlänge des Anschlags minimiert werden.

Grundsätzlich ist ein einziges Lager ausreichend, um die Anschlaghülse gegenüber dem Verstellring drehbar zu lagern. In einer vorteilhaften Weiterbildung wird vorgeschlagen, ein zweites oder weitere axial versetzte Lager zwischen Anschlaghülse und Verstellring anzuordnen, so dass eine parallele Ausrichtung der Anschlaghülse gegenüber dem Werkzeug gewährleistet wird. Durch ein zweites oder weitere Lager kann die Anschlaghülse axial zentriert gegenüber der Verstellhülse und somit gegenüber dem Bohrschaft des Werkzeugs ausgerichtet werden, so dass bei Erreichen des Anschlagpunktes die Winkellage von Anschlag gegenüber Werkzeugausrichtung präzise definiert ist. Dies verbessert die Genauigkeit des Tiefenanschlags sowie der Winkellage des Bohr- oder Fräswerkzeugs bei Erreichen der vorgegebenen Anschlagtiefe.

Die Befestigung der Verstellhülse am Werkzeugschaft kann grundsätzlich beliebig erfolgen, beispielsweise kann am Werkzeugschaft ein Außengewinde vorgesehen sein, worauf ein Innengewinde der Verstellhülse aufgeschraubt werden kann. In einer bevorzugten Ausführungsform kann die Verstellhülse im axial von der Anschlaghülse gegenüberliegenden Bohrschaftendbereich zumindest eine, insbesondere zwei oder mehrere, radial wirkende Verspannmittel umfassen, mittels derer die Verstellhülse drehfest und axial fixierend mit dem Werkzeugschaft verspannbar ist. Durch eine verspannende Befestigung können eine schnelle Lösbarkeit des Anschlags vom Bohrschaft erreicht und somit ein schnelles Auswechseln ermöglicht werden. Des Weiteren können durch ein Verspannmittel, beispielsweise eine Klemme oder eine Spannschraube, auf zusätzliche Befestigungselemente am Werkzeugschaft, wie Gewinde oder Aufnahmeführungen, verzichtet werden. Somit können Standardfräs-, -bohr-, oder -senkwerkzeuge mit einem auswechselbaren Anschlag versehen werden, an denen der Anschlag verspannend befestigt werden kann.

Als Verspannmittel kann in einer bevorzugten Ausführungsform eine oder mehrere Verspannschrauben, insbesondere Inbusschrauben eingesetzt werden, die bevorzugt in radial ausgerichtete Eingriffsvertiefungen oder Fixiergewinde des Werkzeugschafts drehfest und axial arretierend eingreifen können. Durch Verspannschrauben, insbesondere Inbusschrauben, kann die Verspannhülse am Werkzeugschaft an einer beliebigen Position befestigt werden. Sind am Werkzeugschaft Eingriffsvertiefungen, beispielsweise Senkvertiefungen, angeordnet, so können die Inbusschrauben in diese Vertiefungen eingreifen, wobei hierdurch die Verstellhülse an einer definierten Stelle des Werkzeugschafts drehfest befestigt wird. Alternativ können radial ausgerichtet im Werkzeugschaft Fixiergewinde angeordnet sein, so dass Inbusschrauben in das Fixiergewinde eingeschraubt werden können, um die Verstellhülse am Werkzeugschaft zu befestigen. Die Befestigung an einer definierten Stelle des Werkzeugschafts hat den Vorteil, dass eine einmalig eingestellte Anschlagtiefe auch beim Wechseln des Werkzeugs beibehalten wird. Derartige Inbusschrauben lassen sich einfach lösen und anziehen, so dass ein schnelles Wechseln des Werkzeugs ermöglicht wird. Durch ein Verspannen der Verstellhülse können beliebige Anschlagtiefen des Werkzeugs eingestellt werden.

Alternativ zu der obigen Ausführungsform können vorteilhafterweise Klemmmittel, insbesondere ein Klemmring oder eine Klemmschelle, an der Verstellhülse umfasst sein, wodurch die Verstellhülse am Werkzeugschaft klemmend fixierbar sein kann. Derartige Klemmmittel wie ein Klemmring oder eine Klemmschelle können insbesondere werkzeugfrei mittels eines Klemmhebels oder einer Klemmschraube verspannt bzw. gelöst werden, um den Anschlag mit einem Werkzeugschaft zu verbinden. Dies erleichtert die Handhabung, insbesondere das Auswechseln des Werkzeugs oder ein Verschieben des Anschlags auf dem Werkzeugschaft, so dass beliebige Anschlagtiefen eingestellt werden können. Hierdurch kann der Aufwand beim Werkzeugwechsel und die Einsatzfähigkeit des Anschlags deutlich erweitert werden.

Bohr-, Fräs- oder Senkwerkzeuge weisen je nach Einsatztyp unterschiedliche Radien des Werkzeugschafts auf. Um einen Anschlag an verschiedene Werkzeugschaftdurchmesser anzupassen, kann es vorteilhaft sein, das eine oder mehrere Adapterbuchsen vorgesehen sind, die in die Verstellhülse einsteckbar sind, um den Innendurchmesser der Verstellhülse an einen variierenden Werkzeugschaftdurchmesser anpassen zu können. Somit kann mit einem Anschlag und mehreren Adapterbuchsen eine Vielzahl von Werkzeugen verschiedenen Schaftdurchmessern mit einem Anschlag auswechselbar versehen werden, so dass ein universeller auswechselbarer Anschlag vorgeschlagen wird, der auf beliebige Werkzeuge aufgesteckt und an diesen klemmend befestigt werden kann. Dies senkt die Anschaffungskosten und erweitert den Einsatzbereich des Anschlags für eine Vielzahl unterschiedlicher Anwendungen. Es ist denkbar, ein Set mit einem Anschlag und einem oder mehreren Adapterbuchsen zu konfektionieren.

In einer vorteilhaften Weiterentwicklung der Erfindung kann eine Spannschraube auf einem Spanngewinde des Verstellrings angeordnet sein, durch die ein Lagerspiel des Lagers einstellbar ist. Die Spannschraube kann auf einem Außengewinde des Verstellrings als Spanngewinde angeordnet sein und kann ein axiales Spiel des Lagers ermöglichen, so dass zum einen eine geringfügige axiale Beweglichkeit der Anschlaghülse gegenüber der Werkzeugachse einstellbar, und/oder ein Drehmoment der Anschlaghülse, aber der diese sich gegenüber dem Werkzeug verdreht einstellbar ist. Hierdurch kann eine Feineinstellung des Anschlags erreicht werden.

In einem nebengeordneten Aspekt wird ein Bohr-, Fräs- oder Senkwerkzeug mit Anschlag vorgeschlagen, wobei am Werkzeugschaft ein Anschlag nach einem der vorgenannten Ausführungsformen befestigt ist. Ein derartiges Werkzeug kann grundsätzlich aus einem Bohr-, Fräs- oder Senkwerkzeug nach dem Stand der Technik, kombiniert mit einem oben dargestellten Anschlag, ausgebildet sein. Der Anschlag kann beispielsweise als Set mit einer Mehrzahl von verschiedenen Bohr-Fräs- oder Senkwerkzeugen angeboten werden. Der Anschlag kann einzeln oder in Kombination mit einem oder mehreren Rotationswerkzeugen angeboten werden. In dem Set können eine oder mehrere Adapterbuchsen zum Anpassen an verschiedene Schaftdurchmesser von Werkzeugen enthalten sein. Mittels des Anschlags ist es möglich, Standardwerkzeuge mit einem Tiefenanschlag nachzurüsten, und so an den Vorteil der Erfindung zu gelangen.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: einen Microstop-Anschlagadapter mit Werkzeugkopf nach dem Stand der Technik;
- **Fig. 2**: eine Seitenansicht einer Ausführungsform eines erfindungsgemäßen Anschlags mit eingesetztem Senkwerkzeug;
- **Fig. 3**: eine Schnittdarstellung durch eine Ausführungsform eines Anschlags mit Seitendarstellung eines hierzu verwendbaren Werkzeugs;
- **Fig. 4**: in einer Schnittdarstellung eine weitere Ausführungsform eines erfindungsgemäßen Anschlags;
- **Fig. 5**: in einer Schnittdarstellung einen Anschlag mit zugehörigem Senkwerkzeug;
- **Fig. 6**: ein Senkwerkzeug mit einem Anschlag.

In den Figuren sind gleiche oder gleichartige Komponenten mit gleichen Bezugszeichen beziffert.

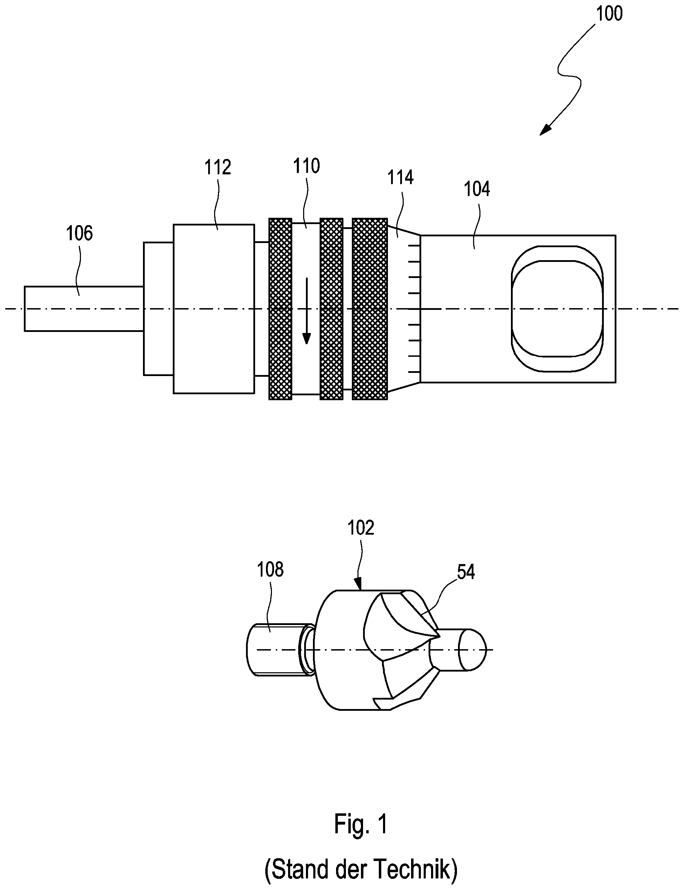

In der Fig. 1 ist in einer Seitendarstellung ein Senkwerkzeug 100 mit Anschlaghülse aus dem Stand der Technik dargestellt. Das Senkwerkzeug 100 umfasst einen Microstop-Anschlaghülsenadapter, der eine Anschlaghülse 104, einen Verstellring 110 mit Endhülse 112 sowie einen Werkzeugschaft 106 umfasst. Der Verstellring 110 ist mit einer Feinverstellung 114 gekoppelt, wobei der Verstellring 110 eine Grobverstellung und die Feinverstellung 114 eine Feinverstellung der Anschlaghülse 104 gegenüber dem Werkzeugschaft 106 ermöglicht. Hierzu ist eine Skalenmarkierung auf dem Feinverstellungsring 114 angebracht. Die Anschlaghülse 104 ist durch ein nicht dargestelltes Lager gegenüber dem Werkzeugschaft 106 frei drehbar gelagert, so dass diese bei Aufsetzen auf der Oberfläche eines Bauteils ein Weiterdrehen des Werkzeugs 100 ermöglicht, und die Anschlaghülse 104 auf der Oberfläche des Bauteils ruhen kann. Im unteren Teilbild ist ein Werkzeugkopf 102, in diesem Fall ein Senkwerkzeug mit einer Vielzahl von Schneidkanten 54 dargestellt, der mittels eines Einschraubgewindes 108 in ein Gewinde des Adapters eingeschraubt werden kann. Bei der Aufnahme des Werkzeugkopfs 102 in ein Gewinde des Anschlagadapters besteht die Gefahr einer axialen Fehlausrichtung, so dass ein Rundlauf der Schneiden 54 des Werkzeugkopfs 102 gegenüber dem Bohrschaft 106 nicht gegeben ist, so dass sich ein unrunder Lauf des Senkwerkzeugs ergibt, und beim Aufsetzen und Senken des Werkzeugs weder eine kreisförmige Bewegung des Werkzeugkopfes gegeben ist, noch der Ansetzwinkel wie gewünscht eingestellt werden kann. Somit werden je nach Qualität der Aufnahme bzw. des Einschraubgewindes gegenüber der Werkzeugaufnahme des Anschlagadapters unterschiedliche Bearbeitungsergebnisse erzielt. Insbesondere nach langem Gebrauch kann die Werkzeugaufnahme des Anschlagadapters Verschleiß aufweisen, so dass sich die Bearbeitungsergebnisse verschlechtern.

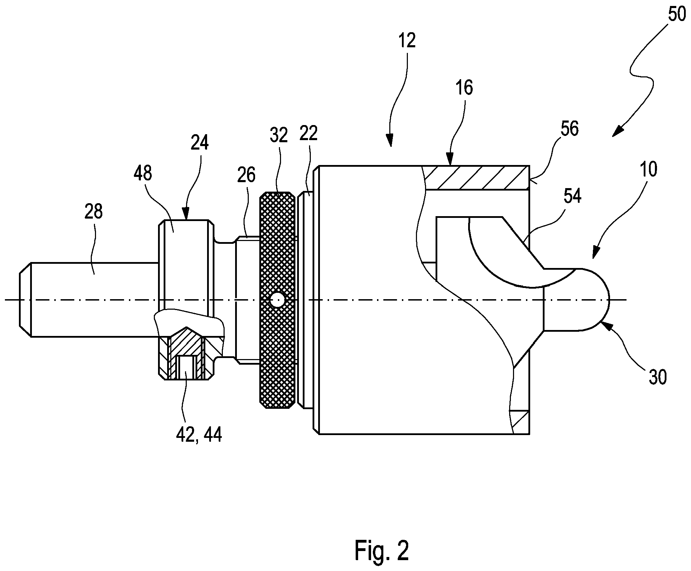

Fig. 2 zeigt ein erstes Ausführungsbeispiel 10 eines erfindungsgemäßen Senkwerkzeugs mit auswechselbarem Anschlag 12, die zusammen ein Anschlag-Senkwerkzeug 50 ausbilden. Der Anschlag 12 weist in einer teilaufgerissenen Seitenansicht eine Anschlaghülse 16 auf, die frei drehend an einer Verstellhülse 24 gelagert ist. Die Verstellhülse 24 weist ein Verstellgewinde 26 auf, auf dem ein Verstellring 22 aufgeschraubt ist, der die Anschlaghülse 16 lagert. Der Anschlag 12 ist auf einem Werkzeugschaft 28 eines Senkwerkzeugs 10 aufgeschoben und arretierend befestigt, wobei das Senkwerkzeug 10 einen Werkzeugkopf 30 mit Schneiden 54 aufweist, und bei der die Anschlaghülse 16 gegenüber der Schneidenposition axial längsverschieblich verstellt werden kann. Eine Verstellung erfolgt durch ein Verdrehen des Verstellrings 22 gegenüber dem Verstellgewinde 26 der Verstellhülse 24. Zum Festlegen der Anschlagposition ist auf dem Verstellgewinde 26 eine Arretiermutter 32 mit einem gerändelten Griffbereich angeordnet, die den Verstellring 22 kontert, so dass seine axiale Längsposition nicht unbeabsichtigt verändert werden kann. Die Verstellhülse 24 ist auf dem Werkzeugschaft 28 mittels eines Verspannmittels 42, in diesem Fall mittels Verspannschrauben 44 verspannend befestigt. Die Verspannschrauben 44 pressen in radialer Richtung auf den Werkzeugschaft 28 und definieren eine Grundposition des Anschlags 12 gegenüber dem Werkzeugkopf 30. Im Bereich des Verstellgewindes 26 kann die Verstellhülse 16 axial gegenüber dem Werkzeugkopf 30 verstellt werden. Durch Lösen der Verspannschrauben 44 kann der Anschlag 12 vom Senkwerkzeug 10 getrennt und beispielsweise auf einem anderen Senk- oder Bohrwerkzeug befestigt werden. Somit kann ein universal einsetzbarer Anschlag 12 mit verschiedenen spanbearbeitenden Drehwerkzeugen kombiniert werden.

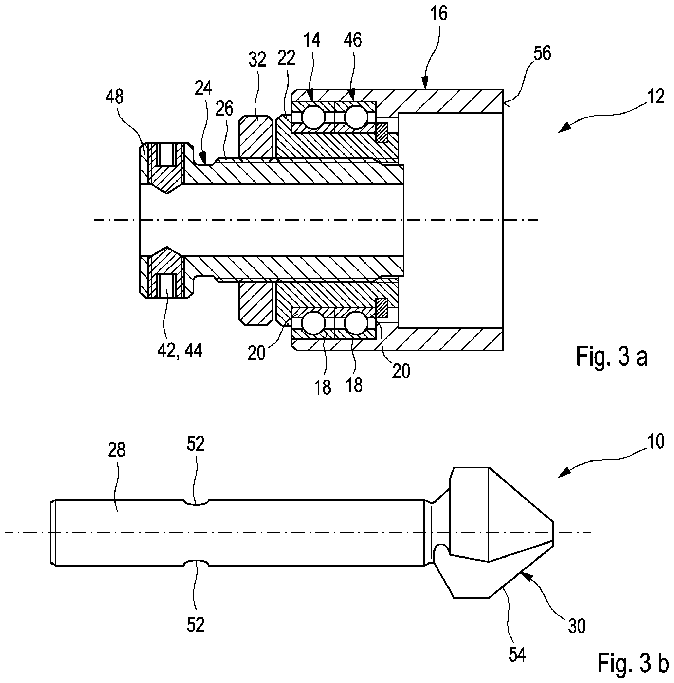

In der Fig. 3a und 3b wird in einer Seitendarstellung sowohl der Anschlag 12 als auch das Senkwerkzeug 10 dargestellt. Der Anschlag 12 umfasst eine Verstellhülse 24, die an ihrem Außenumfang ein Verstellgewinde 26 aufweist. Der axiale Endbereich 48 des Anschlags 12, der in Richtung des Bohrschafts 28 des eingeschobenen Werkzeugs 10 liegt, ist radial vergrößert und weist radial ausgerichtete Bohrungen auf, in denen Verspannschrauben 44 als Verspannmittel 42 eingreifen, um die Verstellhülse 24 gegenüber einem Werkzeugschaft 28 des Werkzeugs 10 zu verspannen. Die Verspannschrauben 42 dienen zum drehfesten axialen Fixieren des Anschlags 12 auf dem Schaft 28 des Senkwerkzeugs 10. Auf dem Verstellgewinde 26 der Verstellhülse 24 ist ein Verstellring 22 aufgeschraubt, der axial verdrehbar die Relativposition der Anschlaghülse 16 gegenüber einem Werkzeugkopf 30 verstellen kann. Zur konternden Festlegung des Verstellrings 22 ist eine Arretiermutter 32 auf dem Verstellgewinde 26 angeordnet, die eine Anschlagposition der Anschlaghülse 16 festlegen kann. Die Anschlaghülse 16 ist mittels zweier Lager 14 und 46 auf dem Verstellring 22 frei drehend gelagert. Jedes Lager 14, 46 weist eine erste äußere Lagerbuchse 18 und eine zweite innere Lagerbuchse 20 auf. Die innere Lagerbuchse 20 ist am Verstellring 22 befestigt und die äußere Lagerbuchse 18 ist an der Anschlaghülse 16 befestigt. Dazwischen ist entweder ein Gleitfilm oder es sind Kugel oder Zylinderwälzelemente angeordnet, um die Anschlaghülse 16 frei drehbar gegenüber dem Verstellring 22 zu lagern. Der Werkzeugschaft 28 des Senkwerkzeugs 10 kann in die Verstellhülse 24 eingeschoben werden, wobei die Verspannschrauben 44 in Eingriffsvertiefungen 52 des Bohrschafts eingeschraubt werden können, um den Anschlag 12 drehfest auf dem Werkzeugschaft 28 zu arretieren. Durch die Eingriffsvertiefungen 52 ist die Längsposition der Verstellhülse 26 auf dem Werkzeugschaft 28 festgelegt, so dass eine Befestigungsposition des Anschlags 12 auf dem Werkzeug 10 vorgegeben ist. Des Weiteren dienen die Eingriffsvertiefungen 52 einer erleichterten Befestigung und bei einem Auswechseln des Werkzeugs 10 bleibt eine voreingestellte Anschlagtiefe beibehalten.

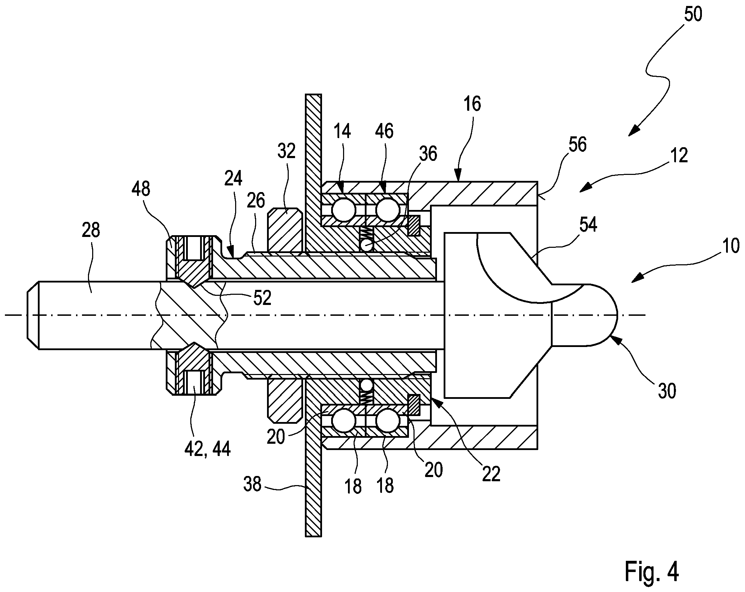

In der Fig. 4 ist eine Seitenschnittdarstellung durch eine weitere Ausführungsform 12 eines erfindungsgemäßen Anschlags dargestellt, die an einem Senkwerkzeug 10 zur Bildung eines Anschlag-Senkwerkzeugs 50 befestigt ist. Der Anschlag 12 umfasst eine Anschlaghülse 16, die mittels zweier Kugellager 14, 46 an einem Verstellring 22 frei drehbar gelagert ist. Die beiden Lager 14, 46 fixieren die Anschlaghülse 16 axial gegenüber dem Werkzeug 10, so dass eine definierte Winkellage beim Erreichen des Tiefenanschlags gewährleistet ist, und sich keine Fehlstellung des Werkzeugs gegenüber der Senkvertiefung bei Erreichen des Anschlags einstellt. Der Verstellring 22 umfasst einen radial vergrößerten Griffbereich 38, mittels dem ein Werker den Verstellring 22 entlang eines Verstellgewindes 26 auf der Verstellhülse 24 verstellen kann. Durch das Verdrehen wird die Anschlagtiefe, d.h. die Relativposition zwischen Anschlaghülse 16 und Werkzeugkopf 30 des Werkzeugs 10 eingestellt. Die außenliegende erste Lagerbuchse 18 ist an der Anschlaghülse 16 befestigt. Die innenliegende zweite Lagerbuchse 20 ist an dem Verstellring 22 befestigt. In gleichwinkligen Abständen ist eine oder sind mehrere - nicht dargestellte - Längsnuten im Verstellgewinde 26 der Verstellhülse 24 angebracht, in denen eine oder mehrere federnd gelagerte Rastkugeln 36 des Verstellrings rastend eingreifen können. Somit wird beim Verdrehen des Verstellrings 22 gegenüber der Verstellhülse 26 durch eine rastende Minimalwinkelverstellung ein vorgegebener Verstellweg definiert, so dass ein Werker den Tiefenanschlag hörbar wie auch fühlbar verstellen kann. Zum arretierenden Verkontern des Verstellrings 22 mit der Verstellhülse 26 ist eine Arretiermutter 32 angeordnet, die nach erfolgter Einstellung der Anschlagtiefe gegenüber dem Verstellring 22 gekontert werden kann. Das Werkzeug 10 umfasst einen Werkzeugkopf 30, an dem eine Vielzahl von Schneidkanten 54 des Senkwerkzeugs 10 angeordnet ist. Die Verstellhülse 24 ist auf einen Werkzeugschaft 28 aufgeschoben und mittels Verspannschrauben 44, die in Eingriffsvertiefungen 52 des Werkzeugschafts 28 eingreifen, drehfest mit dem Werkzeugschaft 28 verbunden.

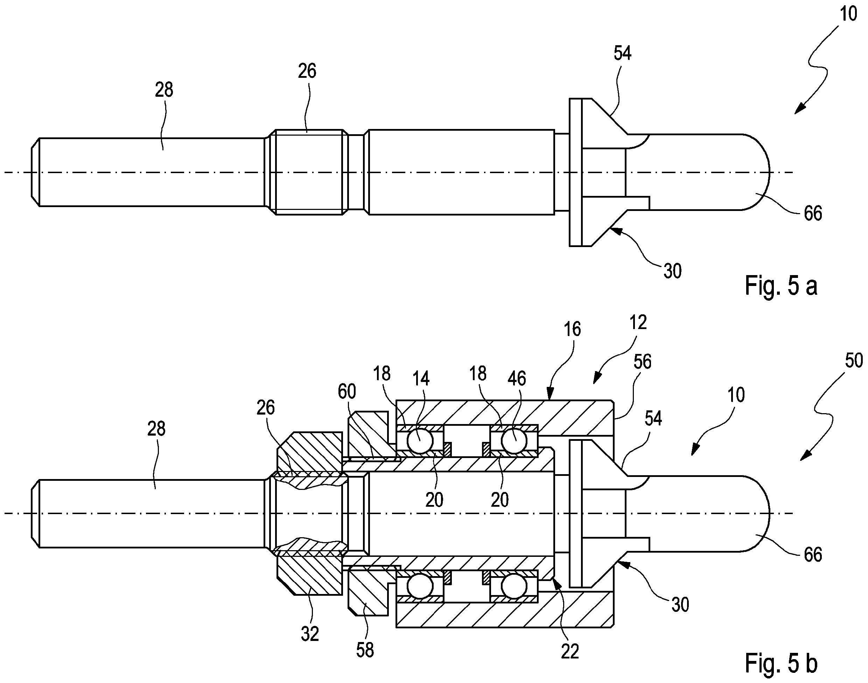

Die Fig. 5 zeigt ein nicht erfindungsgemäßes Anschlag-Entgratungswerkzeugs 50. Das in Fig. 5a dargestellte Senkwerkzeug 10 umfasst auf seinem Werkzeugschaft 28 ein Verstellgewinde 26, so dass auf eine Verstellhülse 24 verzichtet werden kann. Auf das Verstellgewinde 26 des Werkzeugschafts 28 kann unmittelbar ein Anschlag 12 aufgeschraubt werden. Das Werkzeug 10 trägt an seinem Werkzeugkopf 30 ein Einführzapfen 66 sowie eine Mehrzahl von Entgratungs- bzw. Senkschneiden 54.

Der Anschlag 12 umfasst, wie in Fig. 5b dargestellt, eine Anschlaghülse 16, die mittels zweier Kugellager 14, 46 frei drehbar auf einem Verstellring 22 gelagert ist. Der Verstellring 22 ist an seinem einem Spannfutter zugewandten axialen Abschnittsende auf das Verstellgewinde 26 des Werkzeugschafts 28 aufgeschraubt oder kann axial freigelagert auf dem Werkzeugschaft 28 zwischen dem Werkzeugkopf 30 und dem Verstellgewinde 26 aufgeschoben sein. Auf dem Verstellgewinde 26 ist der Verstellring 22 mittels einer Arretiermutter 32 gekontert bzw. in seinem Längsspiel begrenzt, so dass der Verstellring 22 entweder verdrehsicher auf dem Werkzeugschaft 28 aufgeschraubt ist, oder dessen Längsverschieblichkeit begrenzt ist. Durch die Arretiermutter 32 kann die Eintauchtiefe des Entradungswerkzeugs 50 eingestellt werden. Des Weiteren ist auf dem Verstellring 22 eine Spannmutter 58 zum Vorspannen des Lagers 14 und 46 angeordnet. Die Spannmutter 58 wird auf einem Spanngewinde 60 der Verstellring 22 geführt. Mittels der Spannmutter 58 kann ein Spiel, d.h. eine axial freie Beweglichkeit der Anschlaghülse 16 gegenüber dem Verstellring 22 und somit eine Leichtgängigkeit der Lager 14, 46 d.h. ein erforderliches Drehmoment zur Freidrehung der Anschlaghülse 16 eingestellt werden.

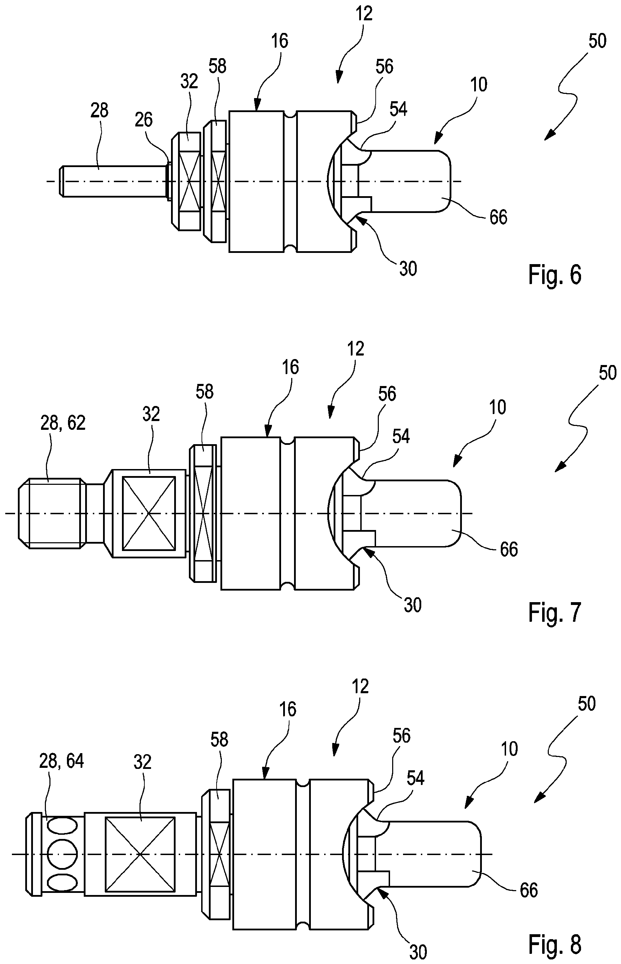

In den Figs. 6, 7 und 8 sind verschiedene nicht erfindungsgemäße Beispiele eines Anschlag-Senkwerkzeuges 50 dargestellt. Hierzu zeigt Fig. 6 ein ähnliches Bespiel wie Fig. 5b mit einem Senkwerkzeug 10, an dem ein Anschlag 12 befestigt ist. Mittels einer Kontermutter 32 ist eine Verdrehsicherung des Verstellrings 22 gegeben. Auf dem Verstellring 22 ist eine Anschlaghülse 16 frei drehbar gelagert. Eine Spannmutter 58 dient zum Einstellen eines Lagerspiels der Anschlaghülse 16. Die Anschlaghülse 16 weist einen frontseitigen Anschlagring 56 auf, wobei nach Eintauchen des Eintauchzapfens 66 des Senkwerkzeugs 10 in eine Bohrung und entgraten der Bohröffnung durch die Schneiden 54 des Werkzeugkopfs 30 der Anschlagring 56 auf einer Oberfläche des zu bearbeitenden Werkstücks ruhend aufsetzt, ohne diese zu verkratzen und somit eine Eintauchtiefe des Werkzeugs 10 in die Bohrung definiert.

Die Fig. 7 zeigt ein ähnliches Anschlag-Werkzeug 50 wie Fig. 6 mit dem Unterschied, dass die Arretiermutter 32 den spannfutterseitigen Abschluss des Werkzeugs 10 bildet, und einstückig mit einem Gewindeschaft 62 als Werkzeugschaft 28 zur Aufnahme in eine Gewindeaufnahme eines Dreh- oder Bohrwerkzeugs ausgeformt ist. Hierdurch dient die Arretiermutter 32 gleichzeitig als Aufnahme und Spannlager des Werkzeugs 10.

In gleicher Weise stellt Fig. 8 ein weiteres Anschlag-Werkzeug 50 dar, wobei die Spannmutter 32 einen "clickchange"-Schnellwechselschaft 64 umfasst. Alternativ kann der Werkzeugschaft 28 einstückig als Gewindeschaft 62 oder Schnellwechselschaft 64 ausgebildet sein, wobei die Spannschraube 32 und der Verstellring 22 mit aufgelagerter Anschlaghülse 16 derart dimensioniert sein müssen, dass diese über das Schaftende 62, 64 geführt werden können.

Insbesondere im Flugzeugbau müssen eine Vielzahl gleichartiger Senkvertiefungen mittels handgehaltender Senkwerkzeuge hergestellt werden. Insbesondere werden Vertiefungen händisch entgratet. Ein Werker führt den Zapfen des Entgranungssenkers ein und senkt den Anschlag auf das Bauteil, bis der Anschlag aufsitzt und still steht, d.h. sich gegenüber dem drehenden Entgratungswerkzeug nicht bewegt. Hierdurch wird die umliegende Oberfläche um eine Bohrstelle geschützt und nicht verkratzt und der Werker kann eine definierte Senktiefe bzw. Entgratungsqualität erreichen. Das Entgratungswerkzeug kann eine Spanfase oder einen Spanradius aufweisen.

Mittels eines auswechselbaren Anschlags 12 können eine Vielzahl von verschiedenen Werkzeugen 10 mit einem Anschlag nachgerüstet werden, wobei durch ein direktes Antreiben des Werkzeugschafts 28 keine Fehlstellung und kein unrunder Lauf des Werkzeugkopfes 30 auftreten kann und bei Verschleiß lediglich das Werkzeug 10 gewechselt und derselbe Anschlag 12 für eine Vielzahl von Werkzeugen 10 verwendet werden kann. Mittels Adapterhülsen kann der Anschlag 12 an verschiedene Durchmesser des Werkzeugschafts 28 angepasst werden. Das Senkwerkzeug 10 wird direkt mit einem Spannfutter einer Dreh- oder Bohrmaschine verspannt und der Tiefenanschlag kann durch ein Verstellen des Verstellrings gegenüber der Verstellhülse leicht eingestellt werden. Die Anschlaghülse 16 weist an ihrem axialen Ende einen stirnseitigen Anschlagring 56 auf, der bei Erreichen des Tiefenanschlags auf der Oberfläche eines zu bearbeitenden Bauteils aufsitzt, wobei sich das Werkzeug 10 weiter frei drehen kann, da es mit der Anschlaghülse 16 durch die beiden Lager 14, 46 frei drehbar verbunden ist.

### Bezugszeichenliste

- 10: Senkwerkzeug
- 12: Anschlag
- 14: Lager
- 16: Anschlaghülse
- 18: erste Lagerbuchse
- 20: zweite Lagerbuchse
- 22: Verstellring
- 24: Verstellhülse
- 26: Verstellgewinde
- 28: Werkzeugschaft
- 30: Werkzeugkopf
- 32: Arretiermutter
- 34: Rastelement
- 36: federnd gelagerte Rastkugel
- 38: Griffbereich
- 40: Zweites Lager
- 42: Verspannsmittel
- 44: Verspannschrauben
- 46: Zweites Lager
- 48: Bohrschaft-Endbereich
- 50: Bohr-, Fräs- oder Senkwerkzeug mit Anschlag
- 52: Eingriffsvertiefung
- 54: Schneide
- 56: Anschlagring
- 58: Spannmutter
- 60: Spanngewinde
- 62: Werkzeug-Gewindeschaft
- 64: Werkzeug-Schnellwechselschaft
- 66: Werkzeugkopf-Einführzapfen
- 100: Senkwerkzeug mit Anschlaghülse des Stands der Technik
- 102: Werkzeugkopf
- 104: Anschlaghülse
- 106: Werkzeugschaft
- 108: Einschraubgewinde
- 110: Verstellring
- 112: Endhülse
- 114: Feinverstellung

## Patentansprüche

1. Auswechselbarer Anschlag (12) für ein rotierendes Bohr-, Fräs- oder Senkwerkzeug (10) mit einstückigem Werkzeugschaft (28), umfassend eine mit einem Gleit- oder Wälzlager (14) um das Werkzeug (10) frei drehbar gekoppelte Anschlaghülse (16), wobei eine erste Lagerbuchse (18) des Lagers (14) die Anschlaghülse (16) trägt, **dadurch gekennzeichnet, dass** eine zweite Lagerbuchse (20) des Lagers (14) drehfest auf einem Verstellring (22) sitzt, der mittels eines auf dem Außenumfang einer Verstellhülse (24) angebrachten Verstellgewindes (26) axial gegenüber der Verstellhülse (24) verstellbar ist, wobei die Verstellhülse (24) auswechselbar an dem Schaft (28) des Werkzeugs (10) drehfest befestigbar ist.

2. Anschlag (12) nach Anspruch 1, **dadurch gekennzeichnet, dass** am Verstellgewinde (26) eine Arretiermutter (32), insbesondere eine Rändelmutter angeordnet ist, die zur konternden Arretierung des Verstellrings (22) ausgelegt ist.

3. Anschlag (12) nach Anspruch 2, **dadurch gekennzeichnet, dass** die Arretiermutter (32) eine Feststellschraube umfasst, mit der die axiale Position der Arretiermutter (32) auf der Verstellhülse (24) fixierbar ist.

4. Anschlag (12) nach Anspruch 2 oder 3, **dadurch gekennzeichnet, dass** die Arretiermutter (32) einen Werkzeug-Gewindeschaft (62) oder einen Werkzeug-Schnellwechselschaft (64) umfasst.

5. Anschlag (12) nach einem der Ansprüche 2 bis 4, **dadurch gekennzeichnet, dass** das Verstellgewinde (26) eine oder mehrere Längsnuten aufweist, und die Arretiermutter (32) und/oder der Verstellring (22) zumindest eine, insbesondere zwei oder mehrere in die Längsnuten eingreifende Rastelemente, insbesondere federnd gelagerte Rastkugeln (36) oder Raststifte umfassen, die eine axiale Minimalverstellbarkeit der Anschlaghülse (16) gegenüber der Verstellhülse (24) definieren.

6. Anschlag (12) nach einem der vorhergehenden Ansprüche, **dadurch gekennzeichnet, dass** der Verstellring (22) einen radial gegenüber der Anschlaghülse (16) vergrößerten Griffbereich (38), bevorzugt einen gerändelten Griffbereich umfasst.

7. Anschlag (12) nach einem der vorhergehenden Ansprüche, **dadurch gekennzeichnet, dass** ein zweites, axial versetztes Lager (46) zwischen Anschlaghülse (16) und Verstellring (22) angeordnet ist.

8. Anschlag (12) nach einem der vorhergehenden Ansprüche, **dadurch gekennzeichnet, dass** die Verstellhülse (24) im axial von der Anschlaghülse (16) gegenüberliegenden Bohrschaft-Endbereich (48) zumindest eine, insbesondere zwei oder mehrere radial wirkende Verspannmittel (42) umfasst, mittels derer die Verstellhülse (24) drehfest und axial fixierend mit dem Werkzeugschaft (28) verspannbar ist.

9. Anschlag (12) nach Anspruch 8, **dadurch gekennzeichnet, dass** die Verspannmittel (42) Verspannschrauben (44), insbesondere Inbusschrauben sind, wobei bevorzugt der Werkzeugschaft (28) radial ausgerichtete Eingriffsvertiefungen (52) oder Fixiergewinde für einen drehfesten und axial arretierenden Eingriff der Fixierschrauben (44) umfasst.

10. Anschlag (12) nach Anspruch 8, **dadurch gekennzeichnet, dass** die Verspannmittel (42) Klemmmittel sind, und insbesondere einen Klemmring oder eine Klemmschelle umfassen, wodurch die Verstellhülse (24) am Werkzeugschaft (28) klemmend fixierbar ist.

11. Anschlag (12) nach einem der vorhergehenden Ansprüche, **dadurch gekennzeichnet, dass** eine oder mehrere Adapterbuchsen umfasst sind, die in die Verstellhülse (24) einsteckbar sind, um diese einem Außenumfang eines Werkzeugschafts (28) anzupassen.

12. Anschlag (12) nach einem der vorhergehenden Ansprüche, **dadurch gekennzeichnet, dass** eine Spannschraube (58) auf einem Spanngewinde (60) des Verstellrings (22) angeordnet ist, durch die ein Lagerspiel des Lagers (14) einstellbar ist.

13. Bohr-, Fräs- oder Senkwerkzeug mit Anschlag (50) **dadurch gekennzeichnet, dass** am Werkzeugschaft (28) ein Anschlag (12) nach einem der vorangegangen Ansprüche befestigt ist.

## Claims

1. Replaceable stop (12) for a rotating drilling, milling or countersinking tool (10) with one-piece tool shank (28), comprising a stop sleeve (16) coupled freely rotatably about the tool (10) with a plain or anti-friction bearing (14), wherein a first bearing bush (18) of the bearing (14) carries the stop sleeve (16), **characterised in that** a second bearing bush (20) of the bearing (14) is mounted co-rotatably on an adjusting ring (22) which is axially adjustable relative to the adjusting sleeve (24) by means of an adjusting thread (26) attached on the outer circumference of said adjusting sleeve (24), wherein said adjusting sleeve (24) is replaceably and co-rotatably fastenable to the shank (28) of the tool (10).

2. Stop (12) according to claim 1, **characterised in that** a lock nut (32), in particular a knurled nut, is arranged on the adjusting thread (26) and is designed for locking the adjusting ring (22).

3. Stop (12) according to claim 2, **characterised in that** the lock nut (32) comprises a fixing bolt, using which the axial position of the lock nut (32) on the adjusting sleeve (24) is fixable.

4. Stop (12) according to claim 2 or 3, **characterised in that** the lock nut (32) comprises a threaded tool shank (62) or a quick-change tool shank (64).

5. Stop (12) according to one of claims 2 to 4, **characterised in that** the adjusting thread (26) has one or more longitudinal grooves, and the lock nut (32) and/or the adjusting ring (22) comprises at least one, in particular two or more engaging elements engaging in the longitudinal grooves, in particular spring-loaded engaging balls (36) or engaging pins, which define a minimum axial adjustability of the stop sleeve (16) relative to the adjusting sleeve (24).

6. Stop (12) according to one of the previous claims, **characterised in that** the adjusting ring (22) comprises a grip area (38), preferably a knurled grip area, radially enlarged relative to the stop sleeve (16).

7. Stop (12) according to one of the previous claims, **characterised in that** a second and axially offset bearing (46) is arranged between stop sleeve (16) and adjusting ring (22).

8. Stop (12) according to one of the previous claims, **characterised in that** the adjusting sleeve (24) comprises in the drilling shank end area (48) axially opposite to the stop sleeve (16) at least one, in particular two or more radially acting tensioning means (42), by means of which the adjusting sleeve (24) is tensionable co-rotatably and in axially fixing manner relative to the tool shank (28).

9. Stop (12) according to claim 8, **characterised in that** the tensioning means (42) are tensioning screws (44), in particular socket screws, wherein the tool shank (28) preferably comprises radially aligned engagement recesses (52) or fixing threads for a co-rotatable and axially locking engagement of the tensioning screws (44).

10. Stop (12) according to claim 8, **characterised in that** the tensioning means (42) are clamping means and in particular comprise a clamping ring or a clamping clip, whereby the adjusting sleeve (24) is fixable in clamping manner on the tool shank (28).

11. Stop (12) according to one of the previous claims, **characterised in that** one or more adapter bushes are included, which are insertable into the adjusting sleeve (24) in order to adapt the latter to an outer circumference of a tool shank (28).

12. Stop (12) according to one of the previous claims, **characterised in that** a clamping nut (58) is arranged on a clamping thread (60) of the adjusting ring (22), by which a bearing clearance of the bearing (14) is settable.

13. Drilling, milling or countersinking tool with stop (50), **characterised in that** a stop (12) according to one of the previous claims is fastened on the tool shank (28).

## Revendications

1. Butée échangeable (12) pour un outil rotatif de perçage, de fraisage ou de chanfreinage (10) avec une tige d'outil (28) en un seul élément, comprenant une douille de butée (16) accouplée à un palier lisse ou à roulement (14) de manière à tourner librement autour de l'outil (10), sachant qu'un premier coussinet (18) du palier (14) porte la douille de butée (16), **caractérisée en ce qu'**un second coussinet (20) du palier (14) est logé, solidarisé en rotation, sur une bague de réglage (22) qui est réglable axialement par rapport à une douille de réglage (24) au moyen d'un filet de réglage (26) situé sur la circonférence extérieure de la douille de réglage (24), sachant que la douille de réglage (24) peut être fixée, solidarisée en rotation, à la tige (28) de l'outil (10) de manière à pouvoir être échangée.

2. Butée (12) selon la revendication 1, **caractérisée en ce qu'**un écrou de blocage (32), notamment un écrou moleté, est disposé sur le filet de réglage (26), lequel écrou est conçu pour bloquer par contrécrou la bague de réglage (22).

3. Butée (12) selon la revendication 2, **caractérisée en ce que** l'écrou de blocage (32) comprend une vis de blocage avec laquelle il est possible de fixer la position axiale de l'écrou de blocage (32) sur la douille de réglage (24).

4. Butée (12) selon la revendication 2 ou 3, **caractérisée en ce que** l'écrou de blocage (32) comprend une tige filetée pour outil (62) ou une tige à serrage rapide pour outil (64).

5. Butée (12) selon les revendications 2 à 4, **caractérisée en ce que** le filet de réglage (26) présente une ou plusieurs rainures longitudinales et que l'écrou de blocage (32) et/ou la bague de réglage (22) comprennent au moins un, notamment deux ou plusieurs éléments d'encliquetage s'encrantant dans les rainures longitudinales, notamment des billes d'encliquetage (36) ou broches d'encliquetage montées sur ressort qui définissent un réglage axial minimum de la douille de butée (16) par rapport à la douille de réglage (24).

6. Butée (12) selon une des revendications précédentes, **caractérisée en ce que** la bague de réglage (22) comprend une zone de prise (38) agrandie radialement par rapport à la douille de butée (16), de préférence une zone de prise moletée.

7. Butée (12) selon une des revendications précédentes, **caractérisée en ce qu'**un second palier (46) axialement en retrait est disposé entre la douille de butée (16) et la bague de réglage (22).

8. Butée (12) selon une des revendications précédentes, **caractérisée en ce que** la douille de réglage (24) comprend, dans l'extrémité de la tige de perçage (48) en face axialement de la douille de butée (16), au moins un, notamment deux ou plusieurs moyens de serrage (42) agissant radialement et au moyen desquels la douille de réglage (24) peut être serrée avec la tige d'outil (28) de manière à être solidaire en rotation et à fixer axialement.

9. Butée (12) selon la revendication 8, **caractérisée en ce que** les moyens de serrage (42) sont des vis de serrage (44), notamment des vis à six pans creux, sachant que de préférence la tige d'outil (28) comprend des encoches de prise orientées radialement (52) ou des filets de retenue pour une prise des vis de serrage (44) solidarisée en rotation et bloquant axialement.

10. Butée (12) selon la revendication 8, **caractérisée en ce que** les moyens de serrage (42) sont des pinces et comprennent notamment un anneau de serrage ou un collier de serrage au moyen duquel la douille de réglage (24) peut être fixée par pincement à la tige d'outil (28).

11. Butée (12) selon une des revendications précédentes, **caractérisée en ce que** sont comprises une ou plusieurs douilles d'adaptation qui peuvent être insérées dans la douille de réglage (24) pour adapter celle-ci à la circonférence extérieure d'une tige d'outil (28).

12. Butée (12) selon une des revendications précédentes, **caractérisée en ce qu'**un écrou de tension (58) est disposée sur un filet de tension (60) de la bague de réglage (22) grâce à laquelle vis il est possible de régler le jeu du palier (14).

13. Outil de perçage, de fraisage ou de chanfreinage avec butée (50) **caractérisé en ce qu'**une butée (12) est fixée sur la tige d'outil (28) selon une des revendications précédentes.
